# EUROPEAN PATENT SPECIFICATION

(11) **EP 2 452 411 B1**
(45) Date of publication and mention of the grant of the patent: **26.06.2013**
(21) Application number: 10745398.7
(22) Date of filing: 09.07.2010
(51) Int. Cl.: H02J 1/08

(54) **APPARATUS AND METHOD FOR THE SEPARATE POWER SUPPLY OF ELECTRONIC CIRCUITS**
VORRICHTUNG UND VERFAHREN ZUR SEPARATEN STROMVERSORGUNG VON ELEKTRONISCHEN SCHALTUNGEN
APPAREIL ET PROCÉDÉ PERMETTANT D OBTENIR UNE ALIMENTATION ÉLECTRIQUE DISTINCTE DE CIRCUITS ÉLECTRONIQUES

(30) Priority: 10.07.2009 IT FI20090154
(43) Date of publication of application: 16.05.2012
(73) Proprietor: Agostinelli, Paolo, 30135 Venezia (IT)
(72) Inventor: Agostinelli, Paolo, 30135 Venezia (IT)
(74) Representative: Cinquantini, Bruno
(86) International application number: PCT/IB2010/053159
(87) International publication number: WO 2011/004350

(56) References cited:
- JP-A- 57 037 940
- JP-A- 62 084 576
- US-A- 5 635 915
- US-A1- 2007 070 662

## Description

### Field of the invention

The invention object of the present application relates to the technical field of power supply units for electronic circuits.

### State of the art

JP 57037940 shows a device for the power supplying of electronic circuits comprising a plurality of photovoltaic cells being electrically connected in a single group so as to supply an output voltage and an electric current of desired intensity, a single power module associated to the output of said group of photovoltaic cells and adapted to power the electronic circuits of different stages of the same apparatus by means of a voltage and a current of suitable value and comprising an artificial light source adapted to illuminate said photovoltaic cells.

One of the problems arising in the making of electronic apparatuses comprising several stages, both active and passive, is that of the undesired interaction between various stages of the same apparatus, which phenomenon may be a serious problem especially in linear and digital amplifier circuits.

The undesired interaction between the various stages of the same apparatus generally occurs with a spurious signal which is added to the input signal thus causing an alteration of the signal itself.

Therefore, this alteration modifies the signal at the circuit input, whereby the output signal will be correspondingly "dirty" and different from the nominal signal expected at the output of said circuit.

Spurious signals may be capacitively or inductively generated or by radiofrequency coupling (RF) from circuits belonging to various stages.

The phenomenon described may lead to the suppression of smaller signals, to the slowing down of the faster ones, to the appearance of signals not originally present.

Interface circuits are employed between the various stages comprising power buffers, transformers, opto-isolators, etc. in an attempt to suppress these damaging interferences.

Another source of disturbance in electronic apparatuses which negatively affects internal electronic circuits is the power supply section. In fact, all circuit stages absorb a certain current during the operation thereof. This current has a variable intensity and significant peaks during the switching transients of the powered electronic components. The power supply currents of all circuit stages of the same apparatus, which currents are different from one another and have various patterns over time, converge into a common point represented by the power supply unit thus causing interferences which are transmitted to the various powered stages, thus modifying their behaviour and "dirtying" the output signals by making them different from the nominal signals.

To obviate the drawback described, the power supply section of the same apparatus may be divided into as many power supply circuits as there are stages to be powered, but the currents they supply are always distributed from a single energy source which is the power supply network to which all currents return thus causing the above-described phenomenon of mutual interference.

Uncoupling stages have been introduced in the power supply circuits in an attempt to separate the circuits from one another, in order to try to suppress such a phenomenon of mutual interference between different circuit sections on the same apparatus. The techniques employed usually range from simple circuits with resistances and capacities to those with integrated circuits to those with transformer isolations.

These circuits only allow this phenomenon to be attenuated but not completely suppressed, as in the end the variations in power supply currents of the single stages are added to the main energy source, which is always the power supply network.

If the circuit provides for the use of batteries as a power source, a method to suppress the interferences due to common power supply may be that of using a multitude of batteries to power the various stages, but this solution is generally quite complex, costly and difficult to be maintained.

The present invention allows the above-described technical problem to be overcome and the undesired interactions between the stages of a same apparatus due to the power supply to be completely suppressed using a device according to claim 1 or a method according to claim 9.

Therefore the present invention is based on dividing the power supply section into separate sub-sections, one for each stage to be powered.

Said division occurs so that each sub-sections has no common point with the others and is associated with an electrically-independent power source based on a structure having solar cells illuminated by one or more artificial light sources preferably chosen from the group comprising energy-saving halogen lamps or high-intensity LEDs. Thereby, as the currents generated by each power subsection have no common point of return and as an interaction between the photons emitted from the light source upstream is not possible, a complete cancellation of the interaction phenomena due to the power supply currents of the single stages is obtained.

In conclusion, we have that various apparatuses connected together reciprocally interact by means of EMI signals and spurious signals produced by the same; a source of reciprocal interaction is the electric power line which is in common. The object of the present invention is to reduce the aforesaid technical problem, by introducing an separate device for electric power supply according to the appended claims.

### Brief description of the drawings

Fig. 1 shows a block diagram of a first preferred embodiment of the apparatus according to the present invention.
Fig. 2 shows a block diagram of a second preferred embodiment of the apparatus according to the present invention.

### Summary of the invention

The present invention relates to the technical field of power supply units for electronic circuits, with particular reference to the power supply units comprising filtering and electromagnetic-interference abatement systems.

### Detailed description of the invention

The present invention concerns an apparatus and method for the separate power supplying of electronic circuits of the same apparatus. Said method is based on the following steps:
a) dividing the power supply section of the electronic circuit 10 under examination into power sub-sections 11 such that each of them has no point electrically in common with the others.
b) connecting each of said sub-sections to a group of solar or photovoltaic cells 12, possibly equipped with a stabilization circuit 13 of the output voltage.
c) grouping the solar cells belonging to said groups of solar cells about an adequate artificial light source 14, said cells being preferably mounted to a support structure 15 and numbered according to the voltages and currents required by the electronic circuitry existing downstream and to be powered.

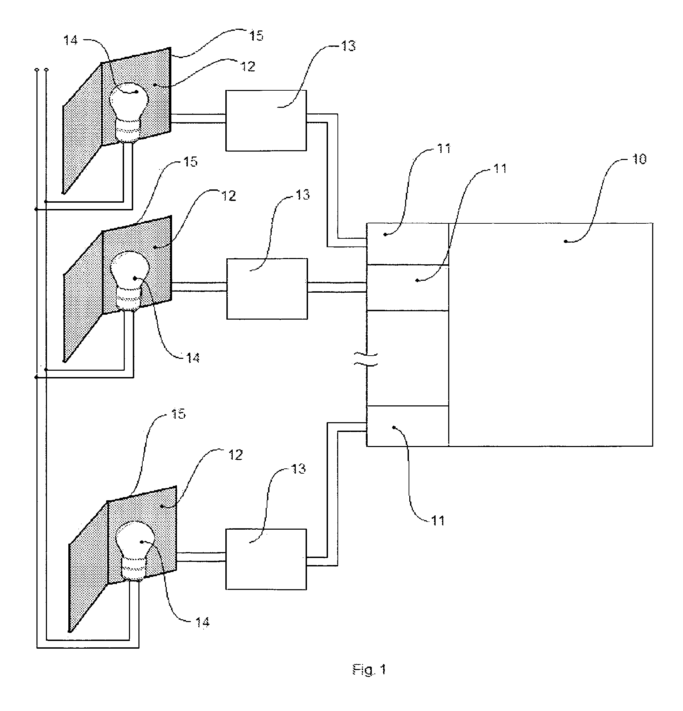

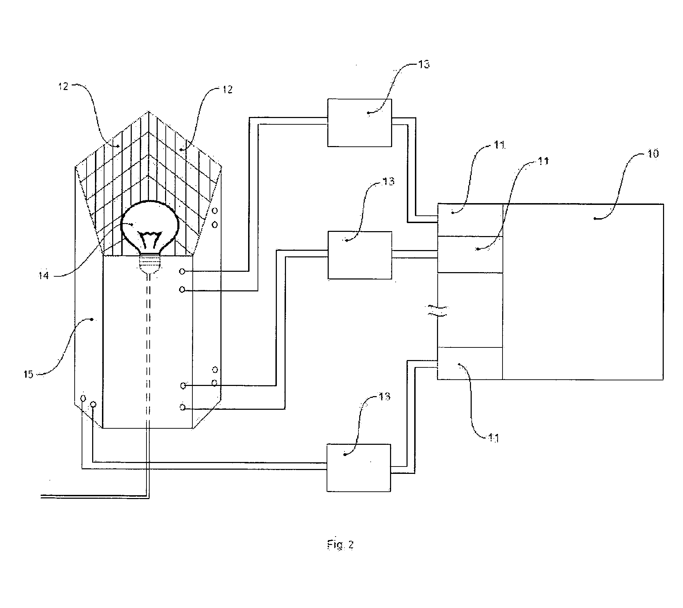

Correspondingly, and with reference to accompanying figures 1 and 2, the device for the separate power supplying of electronic circuits according to the present invention comprises the following components:
at least one support structure 15 adapted to support a plurality of photovoltaic cells 12, said photovoltaic cells 12 being electrically connected in groups so as to supply an output voltage and an electric current of the desired intensity;
a plurality of power modules 11 associated with the output of said groups of photovoltaic cells and adapted to power various sections of electronic circuits by means of voltages and currents of suitable value;
at least one light source 14 associated with said support structures so as to illuminate said photovoltaic cells.

In a preferred embodiment of the present invention, said device for the separate power supplying of electronic circuits belonging to different stages of the same apparatus further comprises a plurality of circuits for stabilizing the voltage output from said photovoltaic cells, said stabilization circuits being connected downstream of said groups of photovoltaic cells and upstream of said power modules.

With reference to accompanying Fig. 2, said support structure is preferably made with a geometric structure having a parallelepiped or prism or polyhedron shape about the artificial light source, so as to optimize the efficiency of the solar cells employed, by maximizing the incidence of the photons emitted from the light source thereon.

Alternatively, as shown in accompanying Fig. 1, said support structure may be constructed with a planar panel using, in this case, a light source with a reflecting element such as to concentrate the photons emitted onto the aforesaid panel. This construction may be suitable if the currents and supply voltages required are modest.

Moreover, said support structure may be within the container of the electronics to be powered or outside, and equipped with a separate container. The geometric solid structure employed may be similar to that described in patent no. 1323277 by the Assignee of the present application, in which a parallelepiped structure is claimed having the side faces internally covered with photovoltaic cells and arranged about an artificial light source. Alternatively, a closed spherical structure may be employed even if of increased constructional complexity.

If the power required is high, cooling means may be advantageously mounted such as fans, for example, to cool down the photovoltaic cells so as to prevent them from overheating and optimize their performance.

The number and dimensions of photovoltaic cells employed depend on the power supply voltages and currents required, as well as the power of the artificial light source. In the present state of the art, the best results in terms of space and electrical performance are obtained by using the new energy-saving halogen lamps, but any light-emitting device capable of supplying the sufficient current to the photovoltaic cells may suit.

## Claims

1. A device for the separate power supplying of electronic circuits, comprising: means to divide the power supply section of the electronic circuit to be powered into power subsections (11) such that each of them has no point electrically in common with the others; a plurality of photovoltaic cells (12), said photovoltaic cells (12) being electrically connected in groups so as to supply an output voltage and an electric current of the desired intensity; a plurality of power modules (11) associated with the output of said groups of photovoltaic cells (12) and adapted to power the electronic circuits of different stages of the same apparatus by means of voltages and currents of suitable value; at least one artificial light source (14) adapted to illuminate said photovoltaic cells.

2. A device according to claim 1, **characterized in that** it comprises at least one support structure (15) adapted to support said plurality of photovoltaic cells (12).

3. A device according to claims 1-2, **characterized in that** it further comprises a plurality of circuits (13) for stabilizing the output voltage from said photovoltaic cells, said stabilization circuits (13) being connected downstream of said groups of photovoltaic cells (12) and upstream of said power modules (11).

4. A device according to claims 1-3, **characterized in that** said at least one support structure (15) comprises at least one planar panel.

5. A device according to claims 1-3, **characterized in that** said at least one support structure (15) comprises a geometric structure having a parallelepiped or prism or polyhedron shape arranged about said artificial light source.

6. A device according to claims 1-3, **characterized in that** said at least one support structure (15) comprises a spherical geometric structure arranged about said artificial light source.

7. A device according to claims 1-6, **characterized in that** it comprises cooling means adapted to cool down said photovoltaic cells so as to prevent them form overheating and optimize their performance.

8. A device according to claims 1-7, **characterized in that** said at least one artificial light source is chosen from the group comprising energy-saving halogen lamps and high-intensity LEDs.

9. A method for the separate power supplying of electronic circuits belonging to the stages of the same apparatus comprising the following steps: a) dividing the power supply section of the electronic circuit to be powered into power subsections (11) such that each of them has no point electrically in common with the others; b) connecting each of said subsections (11) to a group of photovoltaic cells (12) equipped with a circuit for stabilizing the output voltage; c) grouping the photovoltaic cells (12) belonging to said groups of photovoltaic cells about a suitable artificial light source (14), said photovoltaic cells (12) being mounted to a support structure (15) and numbered according to the voltages and currents required by the electronic circuitry existing downstream and to be powered.

## Patentansprüche

1. Vorrichtung für die separate Leistungsversorgung elektronischer Schaltungen, umfassend: ein Mittel, um den Leistungsversorgungsabschnitt der zu betreibenden elektronischen Schaltung in Leistungsunterabschnitte (11) zu unterteilen, so dass jeder von diesen elektrisch keinen Punkt gemeinsam mit den anderen besitzt; eine Mehrzahl photovoltaischer Zellen (12), wobei die photovoltaischen Zellen (12) elektrisch in Gruppen verschaltet sind, um so eine Ausgangsspannung und einen elektrischen Strom der gewünschten Intensität zu liefern; eine Mehrzahl von Leistungsmodulen (11), die dem Ausgang der Gruppen photovoltaischer Zellen (12) zugeordnet und derart angepasst sind, die elektronischen Schaltungen verschiedener Stufen derselben Vorrichtung mittels von Spannungen und Strömen mit geeignetem Wert zu betreiben; zumindest eine Kunstlichtquelle (14), die zur Beleuchtung der photovoltaischen Zellen angepasst ist.

2. Vorrichtung nach Anspruch 1,
**dadurch gekennzeichnet, dass** sie zumindest einen Trägeraufbau (15) umfasst, der derart angepasst ist, die Mehrzahl photovoltaischer Zellen (12) zu tragen.

3. Vorrichtung nach einem der Ansprüche 1 bis 2,
**dadurch gekennzeichnet, dass** sie ferner eine Mehrzahl von Schaltungen (13) zum Stabilisieren der Ausgangsspannung von den photovoltaischen Zellen umfasst, wobei die Stabilisierungsschaltungen (13) stromabwärts der Gruppen photovoltaischer Zellen (12) und stromaufwärts der Leistungsmodule (11) verbunden sind.

4. Vorrichtung nach einem der Ansprüche 1 bis 3,
**dadurch gekennzeichnet, dass** der zumindest eine Trägeraufbau (15) zumindest eine planare Tafel umfasst.

5. Vorrichtung nach einem der Ansprüche 1 bis 3,
**dadurch gekennzeichnet, dass** der zumindest eine Trägeraufbau (15) einen geometrischen Aufbau umfasst, der eine Parallelepiped- oder Prisma- oder Polyederform besitzt, die um die Kunstlichtquelle angeordnet ist.

6. Vorrichtung nach einem der Ansprüche 1 bis 3,
**dadurch gekennzeichnet, dass** der zumindest eine Trägeraufbau (15) einen kugelförmigen geometrischen Aufbau umfasst, der um die Kunstlichtquelle angeordnet ist.

7. Vorrichtung nach einem der Ansprüche 1 bis 6,
**dadurch gekennzeichnet, dass** sie ein Kühlmittel umfasst, das zum Herunterkühlen der photovoltaischen Zellen angepasst ist, um so ein Überhitzen derselben zu verhindern und ihre Leistungsfähigkeit zu optimieren.

8. Vorrichtung nach einem der Ansprüche 1 bis 7,
**dadurch gekennzeichnet, dass** die zumindest eine Kunstlichtquelle aus der Gruppe gewählt ist, die energiesparende Halogenlampen und LEDs mit hoher Intensität umfasst.

9. Verfahren zur separaten Leistungsversorgung von elektronischen Schaltungen, die zu den Stufen derselben Vorrichtung gehören, umfassend die folgenden Schritte: a) Unterteilen des Leistungsversorgungsabschnitts der zu betreibenden elektronischen Schaltung in Leistungsunterabschnitte (11), so dass jeder derselben elektrisch keinen Punkt gemeinsam mit den anderen besitzt; b) Verbinden von jedem der Unterabschnitte (11) mit einer Gruppe photovoltaischer Zellen (12), die mit einer Schaltung zur Stabilisierung der Ausgangsspannung ausgestattet sind; c) Gruppieren der photovoltaischen Zellen (12), die zu den Gruppen der photovoltaischen Zellen gehören, um eine geeignete Kunstlichtquelle (14), wobei die photovoltaischen Zellen (12) an einem Trägeraufbau (15) montiert und gemäß den Spannungen und Strömen beziffert sind, die von der elektronischen Schaltung, die sich stromabwärts befindet und zu betreiben ist, erforderlich sind.

## Revendications

1. Dispositif pour l'alimentation électrique séparée de circuits électroniques, comprenant : des moyens pour diviser la section d'alimentation électrique du circuit électronique destiné à être alimenté en sous-sections électriques (11) de sorte que chacune d'elles ne comporte aucun point électriquement en commun avec les autres ; une pluralité de cellules photovoltaïques (12), lesdites cellules photovoltaïques (12) étant électriquement connectées en groupes afin de fournir une tension de sortie et un courant électrique de l'intensité souhaitée ; une pluralité de modules électriques (11) associés à la sortie desdits groupes de cellules photovoltaïques (12) et adaptés pour alimenter les circuits électroniques de différents étages du même appareil au moyen de tensions et de courants de valeur appropriée ; au moins une source lumineuse artificielle (14) adaptée pour éclairer lesdites cellules photovoltaïques.

2. Dispositif selon la revendication 1, **caractérisé en ce qu'**il comprend au moins une structure de support (15) adaptée pour supporter ladite pluralité de cellules photovoltaïques (12).

3. Dispositif selon les revendications 1 à 2, **caractérisé en ce qu'**il comprend en outre une pluralité de circuits (13) pour stabiliser la tension de sortie à partir desdites cellules photovoltaïques, lesdits circuits de stabilisation (13) étant connectés en aval desdits groupes de cellules photovoltaïques (12) et en amont desdits modules électriques (11).

4. Dispositif selon les revendications 1 à 3, **caractérisé en ce que** ladite au moins une structure de support (15) comprend au moins un panneau plan.

5. Dispositif selon les revendications 1 à 3, **caractérisé en ce que** ladite au moins une structure de support (15) comprend une structure géométrique présentant une forme de parallélépipède ou de prisme ou de polyèdre agencée autour de ladite source lumineuse artificielle.

6. Dispositif selon les revendications 1 à 3, **caractérisé en ce que** ladite au moins une structure de support (15) comprend une structure géométrique sphérique agencée autour de ladite source lumineuse artificielle.

7. Dispositif selon les revendications 1 à 6, **caractérisé en ce qu'**il comprend des moyens de refroidissement adaptés pour refroidir lesdites cellules photovoltaïques afin de les empêcher de surchauffer et d'optimiser leurs performances.

8. Dispositif selon les revendications 1 à 7, **caractérisé en ce que** ladite au moins une source lumineuse artificielle est choisie parmi le groupe comprenant des lampes halogènes à économies d'énergie et des LEDs à haute intensité.

9. Procédé pour l'alimentation électrique séparée de circuits électroniques appartenant aux étages du même appareil comprenant les étapes suivantes : a) la division de la section d'alimentation électrique du circuit électronique destiné à être alimenté en sous-sections électriques (11) de sorte que chacune d'elles ne comporte aucun point électriquement en commun avec les autres ; b) la connexion de chacune desdites sous-sections (11) à un groupe de cellules photovoltaïques (12) équipées d'un circuit pour stabiliser la tension de sortie ; c) le groupement des cellules photovoltaïques (12) appartenant auxdits groupes de cellules photovoltaïques autour d'une source lumineuse artificielle appropriée (14), lesdites cellules photovoltaïques (12) étant montées sur une structure de support (15) et numérotées selon les tensions et les courants requis par la circuiterie électronique existant en aval et destinée à être alimentée.
